Europäisches Patentamt

European Patent Office

Office européen des brevets

(11) Numéro de publication: **0 371 890**

**A1**

(12) **DEMANDE DE BREVET EUROPEEN**

(21) Numéro de dépôt: 89420451.0

(22) Date de dépôt: 17.11.89

(51) Int. Cl.⁵: **B23Q 3/155, A61C 3/04**

(30) Priorité: **21.11.88 FR 8815787**

(43) Date de publication de la demande:
**06.06.90 Bulletin 90/23**

(84) Etats contractants désignés:
**AT BE CH DE ES FR GB GR IT LI LU NL SE**

(71) Demandeur: **Hennequin, Jean-Pierre**
**4 avenue Félix Faure**
**F-69007 Lyon(FR)**

Demandeur: **Blouin, Jean-Louis**
**Château de Malissol**
**F-38200 Vienne(FR)**

Demandeur: **Déchelette, Gilles**
**25 avenue Georges Clémenceau**
**F-69110 Sainte Foy les Lyon(FR)**

Demandeur: **Duret, François**
**Rue Paul Claudel**
**F-38690 Le Grand Lemps(FR)**

Demandeur: **Février, Jean-Jaques**
**21 rue Joseph Riccard**
**F-69110 Sainte Foy les Lyon(FR)**

(72) Inventeur: **Hennequin, Jean-Pierre**
**4 avenue Félix Faure**
**F-69007 Lyon(FR)**
Inventeur: **Blouin, Jean-Louis**
**Château de Malissol**
**F-38200 Vienne(FR)**
Inventeur: **Déchelette, Gilles**
**25 avenue Georges Clémenceau**
**F-69110 Sainte Foy les Lyon(FR)**
Inventeur: **Duret, François**
**Rue Paul Claudel**
**F-38690 Le Grand Lemps(FR)**
Inventeur: **Février, Jean-Jaques**
**21 rue Joseph Riccard**
**F-69110 Sainte Foy les Lyon(FR)**

(74) Mandataire: **Maureau, Philippe et al**
**Cabinet GERMAIN & MAUREAU BP 3011**
**F-69392 Lyon Cédex 03(FR)**

(54) **Magasin pour le rangement d'outils et la présentation de ceux-ci à une machine d'usinage.**

(57) Ce magasin comprend une plaque (2) dans un bord de laquelle débouchent des encoches formant logements pour les outils. A chaque encoche est associée une lame de ressort (9) comportant elle-même une encoche dont le fond forme un tronçon de coupelle (13). L'outil (4) comprend une bague intermédiaire (15) destinée à être pincée entre la plaque (2) et la lame (9), dont la face d'appui (16) sur le disque est plane, et dont l'autre face est en forme de calotte sphérique (17) de forme complementaire de la coupelle.

Application à l'équipement de micro-fraiseuses pour réalisation de prothèses dentaires.

FIG.3

## Magasin pour le rangement d'outils et la présentation de ceux-ci à une machine d'usinage

Les machines-outils sont équipées d'un porte-outils permettant la fixation de façon amovible de différents outils pouvant être successivement utilisés pour réaliser l'usinage d'un produit.

A titre d'exemple, une micro-fraiseuse, destinée à la réalisation de couronnes ou de bridges dentaires nécessite l'utilisation successive de six à douze outils pour le façonnage d'une seule couronne ou d'un seul bridge.

Il est nécessaire d'amener chaque outil devant être utilisé en un point très précis, où il est référencé parfaitement dans ses trois coordonnés rectangulaires et où il est pris en charge par le porte-outils de la machine.

Une première solution consiste à utiliser un magasin comportant un certain nombre de logements dans chacun desquels est engagée la queue d'un outil, chaque logement ayant précisément la forme de la cavité du porte-outils destiné à la fixation de ces outils en période de travail.

Une telle solution nécessite des moyens complexes pour réaliser le transfert de chaque outil du magasin vers le porte-outils et inversement.

Une autre solution consiste à utiliser des porte-outils multibroches dont il est bien connu qu'ils sont des éléments chers et fragiles et qui ne permettent pas, en outre, le stockage ni l'utilisation d'un nombre important d'outils.

Les techniques traditionnelles, même lorsqu'elles donnent satisfaction au plan technique, présentent l'inconvénient d'être très onéreuses de mise en oeuvre et de ne pouvoir, de ce fait, convenir pour des machines d'usinage, telles que des micro-fraiseuses destinées à la réalisation de prothèses dentaires.

La présente invention vise à remédier à ces inconvénients.

A cet effet, le magasin qu'elle concerne comprend une plaque dans laquelle sont ménagés autant de logements que le magasin doit contenir d'outils, chaque logement étant délimité par une encoche à bords parallèles à écartement l'un de l'autre d'une valeur supérieure au diamètre de la queue de l'outil, et dont le fond est arrondi selon un rayon supérieur à celui de la queue de l'outil, cette plaque étant recouverte au niveau de chaque encoche par une lame de ressort s'étendant longitudinalement à l'encoche, de longueur supérieure à celle de cette dernière et fixée sur la plaque à son extrémité opposée à celle située du côté de l'ouverture de l'encoche, chaque lame comportant une encoche disposée en regard de l'encoche d'un logement, et de profil correspondant à celui de cette dernière, les bords délimitant le fond de l'encoche de la lame formant un tronçon de coupelle en forme de calotte sphérique, tandis qu'entre la partie active de l'outil et la queue de celui-ci est disposée une bague dont la face tournée du côté de la queue est perpendiculaire à l'axe de l'outil et dont l'autre face est en forme de calotte sphérique, de profil complémentaire de celle du tronçon de coupelle de la lame.

Cette solution permet de réaliser un parfait positionnement de chaque outil dans le logement qui lui est destiné selon trois axes rectangulaires. L'appui de la bague sur la plaque du magasin réalise le positionnement axial de l'outil, tandis que son positionnement dans les deux autres axes est réalisé par appui de la partie en forme de coupelle de la lame sur la partie en forme de calotte sphérique de la bague de l'outil.

Avantageusement, le bord de la plaque dans lequel débouchent les logements des différents outils est chanfreiné sur la face équipée des lames de ressort sur une longueur inférieure à la profondeur de l'encoche, et l'extrémité libre de chaque lame de ressort est cintrée du côté opposé à la plaque sur laquelle elle est fixée.

De plus, les entrées des encoches ménagées respectivement dans la plaque et dans chaque lame de ressort sont délimitées par des bords convergents.

Ces différentes caractéristiques favorisent les mouvements d'engagement de chaque outil dans le logement qui lui est destiné et de retrait de chaque outil hors de ce logement.

Selon une forme préférentielle d'exécution de ce magasin, la plaque dans laquelle sont ménagées les encoches est en forme de disque associé à un mécanisme d'entraînement en rotation équipé d'un système d'indexation de position angulaire.

Ce magasin se présente alors sous forme d'un barillet dans lequel le nombre de logements ménagés peut être très important, ce nombre pouvant être réglé, d'une part, en tenant compte de l'écartement angulaire entre deux logements adjacents et, d'autre part, en tenant compte du diamètre de la plaque.

De toute façon, l'invention sera bien comprise à l'aide de la description qui suit, en référence au dessin schématique annexé représentant, à titre d'exemple non limitatif, une forme d'exécution de ce magasin :

Figure 1 en est une vue en perspective ;

Figure 2 en est une vue partielle de face ;

Figures 3 et 4 en sont deux vues partielles en coupe transversale, respectivement, avant et après mise en place d'un outil dans son logement.

Le magasin, représenté au dessin, est constitué par un disque 2 dans la périphérie duquel débouchent douze logements 3 orientés radialement, destinés chacun à recevoir un outil 4.

Chaque logement 3 est délimité par une encoche à bords parallèles 5 comportant une entrée conique 6 et dont le fond 7 est arrondi selon un rayon supérieur à celui de la queue de l'outil, les bords parallèles 5 de l'encoche étant à une distance l'un de l'autre, légèrement supérieure au diamètre de la queue 8 de l'outil. Cette plaque 2 est recouverte au niveau de chaque encoche par une lame de ressort 9, les différentes lames de ressort 9 étant fixées du côté du centre du disque par une couronne unique 10.

Chaque lame de ressort comporte une encoche 12 de profil correspondant à celui d'un logement, les bords délimitant le fond de l'encoche de la lame formant un tronçon de coupelle 13 en forme de calotte sphérique.

Par ailleurs, entre la queue 8 de l'outil 4 et la partie active 14 de celui-ci est disposée une bague 15 dont la face 16, tournée du côté de la queue, est perpendiculaire à l'axe de l'outil et dont l'autre face 17 est en forme de calotte sphérique de forme complémentaire de celle du tronçon de coupelle 13.

En outre, et comme montré au dessin, le bord du disque 2 présente un chanfrein 18 sur la face équipée des lames de ressorts 9, ce chanfrein s'étendant sur une longueur inférieure à la profondeur de l' encoche.

Enfin, l'extrémité libre de chaque lame de ressort est cintrée du côté opposé au disque.

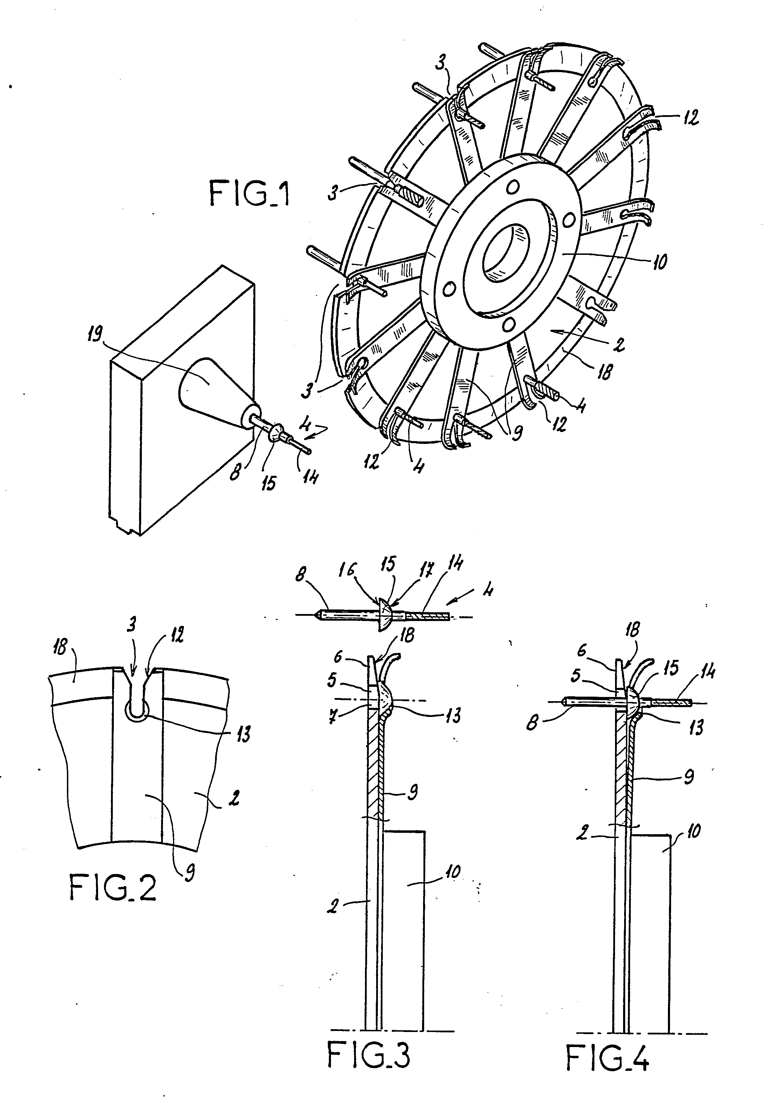

En pratique, la mise en place d'un outil dans son logement est effectuée de la façon indiquée aux figures 3 et 4 par déplacement radial de l'outil. Au cours de ce mouvement, favorisé par le chanfrein 18, le cintrage de la lame de ressort et l'entrée conique de l'encoche, la bague 15 de l'outil s'engage entre le disque et la lame jusqu'à ce que sa partie en forme de calotte sphérique soit engagée dans le tronçon de coupelle 13 de la lame de ressort 9.

Il en résulte un parfait positionnement de l'outil dans le magasin dans deux directions croisées, le positionnement dans la troisième direction, c'est-à-dire dans l'axe de l'outil étant obtenu par appui de la face plane 16 de la bague 15 contre la surface du disque.

Le disque est avantageusement associé à un dispositif d'entraînement en rotation avec indexation de sa position angulaire permettant toujours la prise d'un outil et le démontage de celui-ci par rapport au porte-outils 19 dans une position parfaitement définie. La prise de chaque outil par le porte-outils 19 est en outre favorisée en profilant l'extrémité libre de la queue.

Comme il ressort de ce qui précède, l'invention apporte une grande amélioration à la technique existante, en fournissant un magasin pour outils, de conception simple, et permettant d'assurer un parfait positionnement des outils facilitant la préhension de ceux-ci hors d'un logement ainsi que la remise dans ce logement.

Comme il va de soi, l'invention ne se limite pas à la seule forme d'exécution de ce magasin, décrite ci-dessus à titre d'exemple, elle en embrasse, au contraire, toutes les variantes de réalisation.

C'est ainsi notamment que la plaque comportant le logement pour les outils pourrait être non pas circulaire, mais se présenter sous une forme allongée, éventuellement associée à des moyens d'entraînement en translation, sans que l'on sorte pour autant du cadre de l'invention.

**Revendications**

1. Magasin pour le rangement d'outils et la présentation de ceux-ci à une machine d'usinage, caractérisé en ce qu'il comprend une plaque (2) dans laquelle sont ménagés autant de logements (3) que le magasin doit contenir d'outils (4), chaque logement étant délimité par une encoche à bords parallèles (5) à écartement l'un de l'autre d'une valeur supérieure au diamètre de la queue de l'outil et dont le fond (7) est arrondi selon un rayon supérieur à celui de la queue de l'outil, cette plaque étant recouverte au niveau de chaque encoche par une lame de ressort (9), s'étendant longitudinalement à l'encoche (3), de longueur supérieure à celle de cette dernière et fixée sur la plaque à son extrémité opposée à celle située du côté de l'ouverture de l'encoche, chaque lame comportant une encoche (12) disposée en regard de l'encoche d'un logement (3), et de profil correspondant à celui de cette dernière, les bords délimitant le fond de l'encoche de la lame formant un tronçon de coupelle (13) en forme de calotte sphérique, tandis qu'entre la partie active de l'outil et la queue de celui-ci est disposée une bague (15) dont la face (16) tournée du côté de la queue est perpendiculaire à l'axe de l'outil et dont l'autre face (17) est en forme de calotte sphérique, de profil complémentaire de celle du tronçon de coupelle de la lame.

2. Magasin selon la revendication 1, caractérisé en ce que le bord de la plaque (2) dans lequel débouchent les logements des différents outils est chanfreiné (18) sur la face équipée des lames de ressort (9) sur une longueur inférieure à la profondeur de l'encoche (3).

3. Magasin selon l'une quelconque des revendications 1 et 2, caractérisé en ce que l'extrémité libre de chaque lame de ressort (9) est cintrée du côté opposé à la plaque sur laquelle elle est fixée.

4. Magasin selon l'une quelconque des revendications 1 à 3, caractérisé en ce que les entrées des encoches (3) ménagées respectivement dans la plaque (2) et dans chaque lame de ressort (9) sont délimitées par des bords convergents (6).

5. Magasin selon l'une quelconque des revendications 1 à 4, caractérisé en ce que la plaque (2) dans laquelle sont ménagées les encoches est en forme de disque associé à un mécanisme d'entraînement en rotation équipé d'un système d'indexation de position angulaire.

FIG_1

FIG_2

FIG_3

FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 704 046 (H. DIEBOLD)<br>* revendications 1-5; figure 3 *<br>--- | 1 | B 23 Q  3/155<br>A 61 C  3/04 |
| A | DE-A-2 824 294 (MOOG INC.)<br>* revendication 1; figures 1,6 *<br>--- | 1 | |
| A | DE-U-8 708 517 (SCHMOLL MASCHINEN GMBH)<br>* revendication 1; figure 2, reference 12 *<br>----- | 1 | |

**DOMAINES TECHNIQUES RECHERCHES (Int. Cl.5)**

B 23 Q  3/00
B 23 B  29/00
B 25 H  3/00
A 61 C  19/00
A 61 C  3/04

Le présent rapport a été établi pour toutes les revendications

| Lieu de la recherche | Date d'achèvement de la recherche | Examinateur |
|---|---|---|
| BERLIN | 12-02-1990 | BERNAS Y.N.E. |